# EUROPEAN PATENT SPECIFICATION

(11) **EP 4 104 724 B1**
(45) Date of publication and mention of the grant of the patent: **26.07.2023**
(21) Application number: 21184718.1
(22) Date of filing: 09.07.2021
(51) Int. Cl.: A47J 37/08

(54) **TOASTER**
TOASTER
GRILLE-PAIN

(30) Priority: 15.06.2021 CN 202121322395 U
(43) Date of publication of application: 21.12.2022
(73) Proprietor: Jiangmen City Xinhui Henglong Innovative Housewares Co., Ltd., Jiangmen Guangdong 529156 (CN)
(72) Inventor: NIE, Huayao, Guangdong, 529156 (CN)
(74) Representative: Porta & Consulenti Associati S.p.A.

(56) References cited:
- DE-A1- 1 654 919
- DE-A1- 2 804 701
- US-A- 1 717 926
- US-A- 2 456 291

## Description

### TECHNICAL FIELD

The invention relates to the technical field of food heating equipment, and in particular to a toaster.

### BACKGROUND

Toaster is a cooking utensil used to toast and heat sliced bread and other foodstuffs. As heating and toasting bread and other foodstuffs contributes to improvement of the mouthfeel of foodstuffs with easy operations, toasters are more and more widely used in household, restaurant and hotel settings. When a toaster currently available on the market toasts bread and other foodstuffs, the foodstuffs can only be heated and toasted in a heating section, resulting in a relatively long heating time required for the foodstuffs in the heating section, thus reducing the heating efficiency of the toaster, so that a user needs to wait for a comparatively long time, and the user experience is affected.

A toaster according to the preamble of claim 1 is known from DE-A-1654919.

### SUMMARY

The present invention aims to solve at least one of the technical problems in the existing technology. To this end, the present invention proposes a toaster requiring a short heating time.

A toaster according to the embodiments of the present invention comprises a box body, a feeding bin, a conveying device, a first heating device and a second heating device. A discharging port is provided on one side of the box body. The feeding bin is provided with a feeding end extending into the box body, the feeding end is provided with a feeding port in communication with the inner cavity of the box body. A further end of the feeding bin is provided with a material inlet. The conveying device is arranged between the feeding port and the discharging port, and is configured to convey foodstuffs from the feeding port to the discharging port. The first heating device is configured to heat the foodstuffs on the conveying device, and the second heating device is configured to preheat the foodstuffs within the feeding bin. According to the present invention, the toaster further includes a blower device for delivering at least a portion of heat generated by the second heating device to the feeding port.

A toaster according to the embodiments of the present invention at least has the following beneficial effects. As the toaster is provided with a feeding bin and a second heating device, in the use of the toaster, foodstuffs such as bread are put into the feeding bin through the material inlet, the second heating device preheats the foodstuffs in the feeding bin, then the foodstuffs fall into the conveying device through the feeding port, and the conveying device conveys the foodstuffs to the discharging port. During the conveying process, the first heating device heats the foodstuffs on the conveying device until the foodstuffs are heated to a predetermined parameter, and then the foodstuffs are output from the discharging port to the outside of the box body for users to eat. Since the foodstuffs are already preheated by the second heating device in the feeding bin, the temperature of the foodstuffs has been raised before the first heating device heats the foodstuffs. Moreover, as the water content of the foodstuffs has been reduced, the first heating device only needs to heat the foodstuffs for a relatively short period of time to achieve a preset toasting effect of the foodstuffs, which greatly reduces the heating time needed for the foodstuffs, improves the toasting efficiency of the toaster, reduces the waiting time for users, and improves the user experience.

According to some embodiments of the present invention, the blower device is located below the second heating device and is arranged facing the feeding port.

According to some embodiments of the present invention, the second heating device is located below the conveying device and is arranged facing the feeding port.

According to some embodiments of the present invention, the conveying device includes a first conveying device and a second conveying device, the first conveying device is located below the feeding port, and the second conveying device is located between the first conveying device and the discharging port.

According to some embodiments of the present invention, the first conveying device includes a first conveying mesh chain, a first conveying shaft and a first conveying motor, the first conveying motor is configured to drive the first conveying mesh chain to rotate through the first conveying shaft, such that the first conveying mesh chain is capable of conveying the foodstuffs from the feeding port to the second conveying device.

According to some embodiments of the present invention, the second conveying device includes a second conveying mesh chain, a second conveying shaft and a second conveying motor, the second conveying motor is configured to drive the second conveying mesh chain to rotate through the second conveying shaft, such that the second conveying mesh chain is capable of conveying the foodstuffs from the first conveying device to the discharging port.

According to some embodiments of the present invention, the second heating device includes at least two heating tubes, and the at least two heating tubes are respectively located at upper and lower sides of a conveying surface of the second conveying mesh chain.

According to some embodiments of the present invention, the toaster further includes a heat insulator arranged between the heating tubes and the feeding bin.

According to some embodiments of the present invention, the feeding bin is further provided with a top cover removably covering the material inlet.

Additional aspects and advantages of the present invention will be given in part in the following description, and will become apparent in part from the following description or be learned by practice of the present invention.

### BRIEF DESCRIPTION OF DRAWINGS

The above and/or additional aspects and advantages of the present invention will become apparent and readily understood from the description of embodiments made in conjunction with the following accompanying drawings, in which:
Fig. 1 is a schematic view of the three-dimensional structure of a toaster according to an embodiment of the present invention;
Fig. 2 is an exploded view of the structure of the toaster according to an embodiment of the present invention;
Fig. 3 is a schematic top view of the toaster according to an embodiment of the present invention; and
Fig. 4 is a schematic sectional view of Fig. 3 taken along line A-A.

Reference numerals:
box body 100, discharging port 110, observation window 120, operation panel 130;
feeding bin 200, feeding port 210, material inlet 220, top cover 230;
first conveying device 300, first conveying mesh chain 310, first conveying shaft 320, first conveying motor 330;
second conveying device 400, second conveying mesh chain 410, conveying surface 411, second conveying shaft 420, second conveying motor 430;
first heating device 500;
second heating device 600;
blower device 700; and
heat insulator 800.

### DETAILED DESCRIPTION

Embodiments of the present invention will be described in detail below. Examples of the embodiments are illustrated in the accompanying drawings, where the same or like reference numerals throughout the figures indicate the same or like elements having the same or like functions. The embodiments described below with reference to the accompanying drawings are exemplary and are intended only to explain the present invention instead of being construed as limiting the present invention.

In the description of the present invention, it should be understood that, descriptions relating to orientation, for example, orientation or positional relationships indicated by "up", "down", "front", "back", "left", "right", etc. are based on the orientation or positional relationships shown in the accompanying drawings, and are to facilitate the description of the present invention and simplify the description only, rather than indicating or implying that the device or element referred to must have a specific orientation or be constructed and operated in a specific orientation, and therefore cannot be construed as limiting the present invention.

In the description of the present invention, the meaning of "several" is one or more, the meaning of "a plurality of' is two or more, "greater than", "less than", "more than", etc. are to be understood to exclude the given figure, and "above", "below", "within", etc. are understood to include the given figure. If "first" and "second", etc. are referred to, it is only for the purpose of distinguishing technical features, and shall not be understood as indicating or implying relative importance or implying the number of the indicated technical features or implying the sequence of the indicated technical features.

In the description of the present invention, unless otherwise explicitly defined, the words such as "set", "install", and "connect" should be understood in a broad sense, and those skilled in the art can determine the specific meanings of the above words in the present invention in a rational way in combination with the specific contents of the technical solutions.

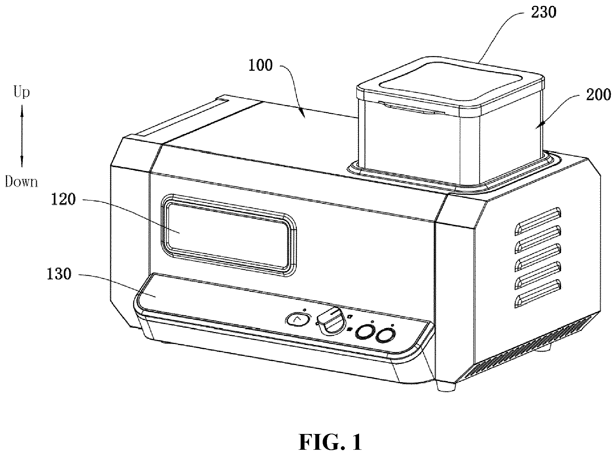

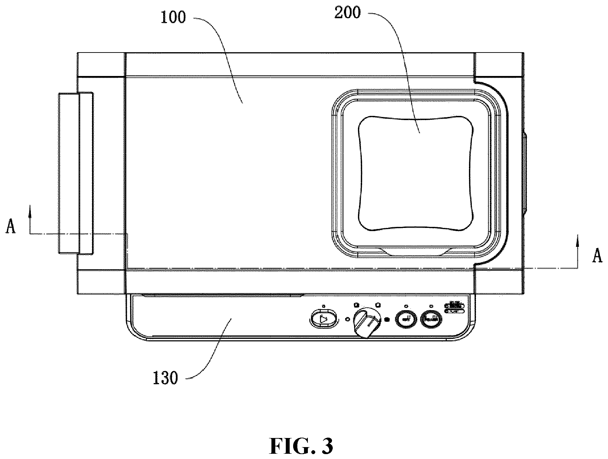

Referring to Figs. 1 to 4, a toaster according to an embodiment of the present invention includes a box body 100, a feeding bin 200, a conveying device, a first heating device 500, and a second heating device 600. The box body 100 may be substantially cuboid, and of course, the box body 100 may be of other shapes. One side of the box body 100 is provided with a discharging port 110, and the foodstuffs are heated and then discharged to the outside of the box body 100 through the discharging port 110. A side wall of the box body 100 may also be provided with an observation window 120 through which a user can observe the internal condition of the box body 100. Of course, the box body 100 may also be provided with an operation panel 130 through which the user can control the operation of the toaster. The feeding bin 200 is of a cylindrical structure and is for storing bread or other foodstuffs to be heated. An opening is provided in an upper end side wall or an outer peripheral side wall of the box body 100, and the feeding bin 200 extends into the inside of the box body 100 through the opening. The feeding bin 200 is provided at a feeding end with a feeding port 210 in communication with the inner cavity of the box body 100, and a material inlet 220 at the other end of the feeding bin 200. When using the toaster, the user puts foodstuffs into the feeding bin 200 through the material inlet 220, and during heating, the foodstuff enters the conveying device through the feeding port 210. Specifically, the conveying device is arranged between the feeding port 210 and the discharging port 110, so that the conveying device can convey the foodstuffs from the feeding port 210 to the discharging port 110. The conveying device may be a chain conveying mechanism, and may also be a belt conveying mechanism, and of course, other types of conveying mechanisms may also be used. The first heating device 500 is configured to heat the foodstuffs on the conveying device, and may be of an electrical heating tube structure, a ceramic heating structure, or other types of heating structure. The second heating device 600 is configured to preheat the foodstuffs within the feeding bin 200, and similar to the first heating device 500, it may be of an electrical heating tube structure, a ceramic heating structure, or other types of heating structure.

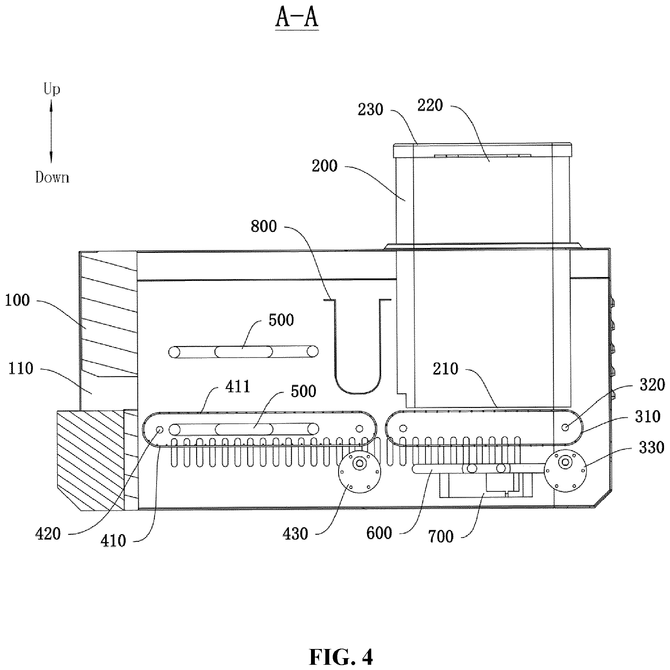

Referring to Fig. 4, as the toaster is provided with a feeding bin 200 and a second heating device 600, in the use of the toaster, foodstuffs such as bread are put into the feeding bin 200 through the material inlet 220, the second heating device 600 preheats the foodstuffs in the feeding bin 200, then the foodstuffs fall into the conveying device through the feeding port 210, and the conveying device conveys the foodstuffs to the discharging port 110. During the conveying process, the first heating device 500 heats the foodstuffs on the conveying device until the foodstuffs are heated to a predetermined parameter, and then the foodstuffs are output from the discharging port 110 to the outside of the box body 100 for users to eat. Since the foodstuffs are already preheated by the second heating device 600 in the feeding bin 200, the temperature of the foodstuffs has been raised before the first heating device 500 heats the foodstuffs. Moreover, as the water content of the foodstuffs has been reduced, the first heating device 500 only needs to heat the foodstuffs for a relatively short period of time to achieve a preset toasting effect of the foodstuffs, which greatly reduces the heating time needed for the foodstuffs, improves the toasting efficiency of the toaster, reduces the waiting time for users, and improves the user experience.

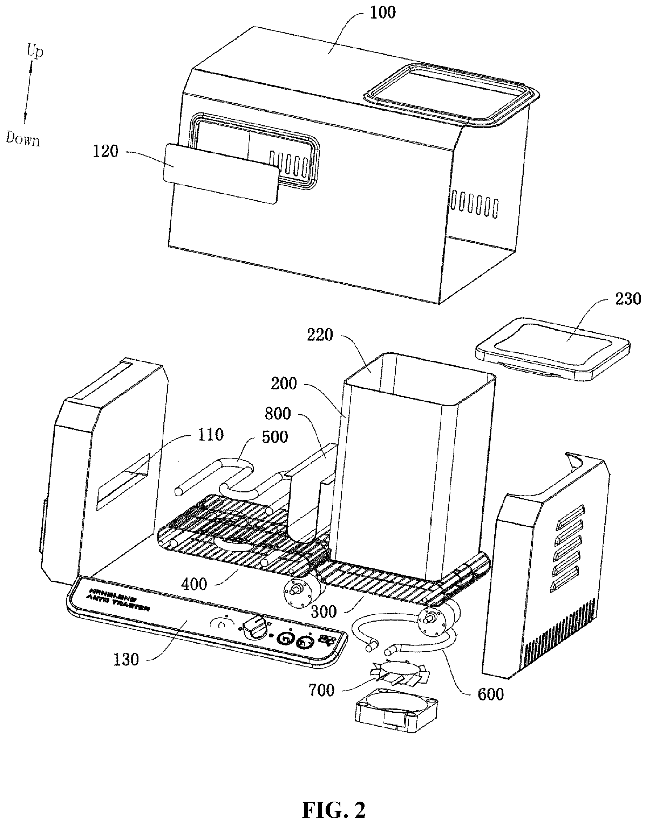

Referring to Figs. 2 and 4, the toaster further includes a blower device 700 for delivering at least a portion of the heat generated by the second heating device 600 to the feeding port 210. The blower device 700 may be a small fan including fan blades. Of course, the blower device 700 may also be a bladeless fan. The blower device 700 can drive air to flow, thereby conveying at least a portion of the heat generated by the second heating device 600 to the feeding port 210, and then the heat in turn enters the feeding bin 200, so that the foodstuffs within the feeding bin 200 can be better preheated. By providing the blower device 700, more heat generated by the second heating device 600 can enter the inside of the feeding bin 200, thereby improving the preheating effect of the foodstuffs. Moreover, the blower device 700 accelerates the flow of air within the feeding bin 200, thereby facilitating rapid reduction of the water content of the foodstuffs.

Referring to Fig. 2, in the above embodiments, the blower device 700 is located below the second heating device 600, therefore, the air blown out from the blower device 700 can blow the heat generated by the second heating device 600, and at the same time, the blower device 700 is arranged facing the feeding port 210, so that the heat is blown toward the feeding port 210, and more heat can be conveyed into the feeding bin 200, improving the preheating effect.

In the above embodiment, the second heating device 600 is located below the conveying device, thereby preventing the second heating device 600 from affecting the entry of the foodstuffs into the conveying device from the feeding port 210. Moreover, the second heat device 600 is arranged facing the feeding port 210. Specifically, the second heating device 600 may be located directly below the feeding port 210, and the blower device 700 is located directly below the second heating device 600, in which case the distance between the second heating device 600 and the feeding port 210 is smaller, thereby facilitating the delivery by the blower device 700 of the heat generated by the second heating device 600 to the inside of the feeding bin 200 through the feeding port 210. Of course, the second heating device 600 may be arranged below the feeding port 210 and slightly offset from the position directly below according to actual installation requirements, however, the present invention is not limited thereto.

Referring to Fig. 4, in some embodiments of the present invention, the conveying device includes a first conveying device 300 located below the feeding port 210 and a second conveying device 400 located between the first conveying device 300 and the discharging port 110. After exiting from the feeding port 210, the foodstuffs first enters the first conveying device 300, and is then conveyed by the first conveying device 300 to the second conveying device 400, and is conveyed by the second conveying device 400 to the discharging port 110. The second heating device 600 is located below the first conveying device 300. Since there are two conveying devices arranged on the path from the feeding port 210 to the discharging port 110, operating parameters can be set differently according to different preferences of users such that the parameters such as conveying speed and conveying time of the two conveying devices can be different from each other, so as to obtain different tastes of the toasted foodstuffs as required by the users. When the foodstuffs are located on the first heating device 500, the second heating device 600 can preheat the foodstuffs.

Referring to Fig. 4, in the above embodiments, the first conveying device 300 includes a first conveying mesh chain 310, a first conveying shaft 320, and a first conveying motor 330. The first conveying mesh chain 310 is configured to carry foodstuffs. In particular, two first conveying shafts 320 may be provided. The two first conveying shafts 320 are respectively located at two ends of the first conveying mesh chain 310, and the first conveying motor 330 drives one of the first conveying shafts 320 to rotate. During operation, the first conveying motor 330 drives the first conveying mesh chain 310 to rotate through the first conveying shaft 320, so that the first conveying mesh chain 310 can convey foodstuffs from the feeding port 210 to the second conveying device 400, and the conveying is very convenient.

Referring to Fig. 4, similarly, the second conveying device 400 includes a second conveying mesh chain 410, a second conveying shaft 420, and a second conveying motor 430. The second conveying mesh chain 410 is configured to carry foodstuffs. Two second conveying shafts 420 may be provided. The two second conveying shafts 420 are respectively located at two ends of the second conveying mesh chain 410, and the second conveying motor 430 drives one of the second conveying shafts 420 to rotate. During operation, the second conveying motor 430 drives the second conveying mesh chain 410 to rotate through the second conveying shaft 420, so that the second conveying mesh chain 410 can convey foodstuffs from the first conveying device 300 to the discharging port 110, and the conveying is very convenient.

Referring to Figs. 2 and 4, in some embodiments of the present invention, the second heating device 600 includes at least two heating tubes, and the at least two heating tubes are respectively located at upper and lower sides of the conveying surface 411 of the second conveying mesh chain 410, so that both the upper and lower sides of the foodstuffs passing through the second conveying mesh chain 410 can be fully heated, and the toasting effect of the foodstuffs are greatly improved.

Referring to Fig. 2, in some embodiments of the present invention, the toaster further includes a heat insulator 800 arranged between the heating tubes and the feeding bin 200. Since the temperature in the vicinity of the heating tube is relatively high and excessively high temperature may cause damage to the side wall of the feeding bin 200, the heat insulator 800 is arranged between the heating tube and the feeding bin 200, so that the heat of the heating tube can be insulated by the heat insulator 800, thereby reducing the influence on the side wall of the feeding bin 200. Specifically, the heat insulator 800 may be a U-shaped plate member that can effectively insulate the heat generated by the heating tube.

Referring to Figs. 1 and 4, in some embodiments of the present invention, the feeding bin 200 is also provided with a top cover 230, the top cover 230 removably covers the material inlet 220. The top cover 230 can be configured to cover the material inlet 220 to prevent dust or other impurities from falling into the feeding bin 200 and contaminating the foodstuffs in the feeding bin 200.

Although the embodiments of the present invention have been described in detail above with reference to the accompanying drawings, the present invention is not limited to the above embodiments, and various changes may be made within the knowledge of those of ordinary skill in the art without departing from the scope of the present invention, which is defined in the appended claims.

## Claims

1. A toaster, comprising:
a box body (100) provided with a discharging port (110) on one side;
a feeding bin (200) having a feeding end that extends into the box body (100) and is provided with a feeding port (210) in communication with an inner cavity of the box body (100) and having a further end provided with a material inlet (220);
a conveying device (300, 400) arranged between the feeding port (210) and the discharging port (110) and configured to convey foodstuffs from the feeding port (210) to the discharging port (110);
a first heating device (500) for heating the foodstuffs on the conveying device (400); and
a second heating device (600) for preheating the foodstuffs within the feeding bin (200); **characterized in that**:
the toaster further comprises a blower device (700) for delivering at least a portion of heat generated by the second heating device (600) to the feeding port (210).

2. The toaster of claim 1, wherein the blower device (700) is located below the second heating device (600) and is arranged facing the feeding port (210).

3. The toaster of claim 2, wherein the second heating device (600) is located below the conveying device (300) and is arranged facing the feeding port (210).

4. The toaster of claim 1, wherein the conveying device (300, 400) comprises a first conveying device (300) and a second conveying device (400), the first conveying device (300) is located below the feeding port (210), and the second conveying device (400) is located between the first conveying device (300) and the discharging port (110).

5. The toaster of claim 4, wherein the first conveying device (300) comprises a first conveying mesh chain (310), a first conveying shaft (320) and a first conveying motor (330), the first conveying motor (330) is configured to drive the first conveying mesh chain (310) to rotate through the first conveying shaft (320), such that the first conveying mesh chain (310) is capable of conveying the foodstuffs from the feeding port (210) to the second conveying device (400).

6. The toaster of claim 4, wherein the second conveying device (400) comprises a second conveying mesh chain (410), a second conveying shaft (420) and a second conveying motor (430), the second conveying motor (430) is configured to drive the second conveying mesh chain (410) to rotate through the second conveying shaft (420), such that the second conveying mesh chain (410) is capable of conveying the foodstuffs from the first conveying device (300) to the discharging port (110).

7. The toaster of claim 6, wherein the second heating device (600) comprises at least two heating tubes, and the at least two heating tubes are respectively located at upper and lower sides of a conveying surface of the second conveying mesh chain.

8. The toaster of claim 7, further comprising a heat insulator (800) arranged between the heating tubes and the feeding bin (200).

9. The toaster of any one of claims 1 to 8, wherein the feeding bin (200) is further provided with a top cover (230) removably covering the material inlet (220).

## Patentansprüche

1. Toaster, bestehend aus:
einen Kastenkörper (100), der auf einer Seite mit einer Auswurföffnung (110) versehen ist;
einen Zuführbehälter (200) mit einem Zuführende, das sich in den Kastenkörper (100) hinein erstreckt und mit einer Zuführöffnung (210) in Verbindung mit einem inneren Hohlraum des Kastenkörpers (100) versehen ist und ein weiteres Ende aufweist, das mit einem Materialeinlass (220) versehen ist;
eine Fördervorrichtung (300, 400), die zwischen der Zuführöffnung (210) und der Auswurföffnung (110) angeordnet ist und so ausgebildet ist, dass sie Lebensmittel von der Zuführöffnung (210) zur Auswurföffnung (110) fördert;
eine erste Heizvorrichtung (500) zum Erhitzen der Lebensmittel auf der Fördervorrichtung (400); und
eine zweite Heizvorrichtung (600) zum Vorerhitzen der Lebensmittel in dem Zuführbehälter (200); **dadurch gekennzeichnet, dass**:
der Toaster ferner eine Gebläsevorrichtung (700) umfasst, um zumindest einen Teil der von der zweiten Heizvorrichtung (600) erzeugten Wärme an die Zuführöffnung (210) zu leiten.

2. Toaster nach Anspruch 1, wobei sich die Gebläsevorrichtung (700) unterhalb der zweiten Heizvorrichtung (600) befindet und derart angeordnet ist, dass sie der Zufuhröffnung (210) zugewandt ist.

3. Toaster nach Anspruch 2, wobei die zweite Heizvorrichtung (600) unterhalb der Fördervorrichtung (300) und gegenüber der Zufuhröffnung (210) angeordnet ist.

4. Toaster nach Anspruch 1, wobei die Fördervorrichtung (300, 400) eine erste Fördervorrichtung (300) und eine zweite Fördervorrichtung (400) umfasst, wobei die erste Fördervorrichtung (300) unterhalb der Zuführöffnung (210) angeordnet ist und die zweite Fördervorrichtung (400) zwischen der ersten Fördervorrichtung (300) und der Auswurföffnung (110) angeordnet ist.

5. Toaster nach Anspruch 4, wobei die erste Fördervorrichtung (300) eine erste Fördermaschenkette (310), eine erste Förderwelle (320) und einen ersten Fördermotor (330) umfasst, wobei der erste Fördermotor (330) so ausgebildet ist, dass er die erste Fördermaschenkette (310) so antreibt, dass sie durch die erste Förderwelle (320) dreht, so dass die erste Fördermaschenkette (310) in der Lage ist, die Lebensmittel von der Zuführöffnung (210) zur zweiten Fördervorrichtung (400) zu fördern.

6. Toaster nach Anspruch 4, wobei die zweite Fördervorrichtung (400) eine zweite Fördermaschenkette (410), eine zweite Förderwelle (420) und einen zweiten Fördermotor (430) umfasst, wobei der zweite Fördermotor (430) so ausgebildet ist, dass er die zweite Fördermaschenkette (410) so antreibt, dass sie durch die zweite Förderwelle (420) dreht, so dass die zweite Fördermaschenkette (410) in der Lage ist, die Lebensmittel von der ersten Fördervorrichtung (300) zur Auswurföffnung (110) zu fördern.

7. Toaster nach Anspruch 6, wobei die zweite Heizvorrichtung (600) mindestens zwei Heizrohre umfasst und die mindestens zwei Heizrohre jeweils an der oberen und unteren Seite einer Förderfläche der zweiten Fördermaschenkette angeordnet sind.

8. Toaster nach Anspruch 7 ferner umfassend einen Wärmeisolator (800), der zwischen den Heizrohren und dem Zuführbehälter (200) angeordnet ist.

9. Toaster nach einem der Ansprüche 1 bis 8, wobei der Zuführbehälter (200) ferner mit einer oberen Abdeckung (230) versehen ist, die den Materialeinlass (220) abnehmbar abdeckt.

## Revendications

1. Grille-pain, comprenant :
un corps de boîte (100) pourvu d'un orifice d'évacuation (110) sur un côté ;
un bac d'alimentation (200) dont l'extrémité d'alimentation s'étend à l'intérieur du corps de boîte (100) et est pourvue d'un orifice d'alimentation (210) en communication avec une cavité intérieure du corps de boîte (100) et dont l'autre extrémité est pourvue d'une entrée de matériau (220) ;
un dispositif de transport (300, 400) disposé entre l'orifice d'alimentation (210) et l'orifice d'évacuation (110) et configuré pour transporter les denrées alimentaires de l'orifice d'alimentation (210) à l'orifice d'évacuation (110) ;
un premier dispositif de chauffage (500) pour chauffer les denrées alimentaires sur le dispositif de transport (400) ; et
un second dispositif de chauffage (600) pour préchauffer les denrées alimentaires dans le bac d'alimentation (200) ; **caractérisé en ce que** :
le grille-pain comprend en outre un dispositif de soufflage (700) pour délivrer au moins une partie de la chaleur générée par le second dispositif de chauffage (600) à l'orifice d'alimentation (210).

2. Grille-pain selon la revendication 1, dans lequel le dispositif de soufflage (700) est situé sous le second dispositif de chauffage (600) et est disposé face à l'orifice d'alimentation (210).

3. Grille-pain selon la revendication 2, dans lequel le second dispositif de chauffage (600) est situé sous le dispositif de transport (300) et est disposé face à l'orifice d'alimentation (210).

4. Grille-pain selon la revendication 1, dans lequel le dispositif de transport (300, 400) comprend un premier dispositif de transport (300) et un second dispositif de transport (400), le premier dispositif de transport (300) étant situé sous l'orifice d'alimentation (210), et le second dispositif de transport (400) étant situé entre le premier dispositif de transport (300) et l'orifice d'évacuation (110).

5. Grille-pain selon la revendication 4, dans lequel le premier dispositif de transport (300) comprend une première chaîne à mailles de transport (310), un premier arbre de transport (320) et un premier moteur de transport (330), le premier moteur de transport (330) étant configuré pour entraîner la première chaîne à mailles de transport (310) à tourner à travers le premier arbre de transport (320), de sorte que la première chaîne à mailles de transport (310) soit capable de transporter les aliments de l'orifice d'alimentation (210) vers le second dispositif de transport (400).

6. Grille-pain selon la revendication 4, dans lequel le second dispositif de transport (400) comprend une seconde chaîne à mailles de transport (410), un second arbre de transport (420) et un second moteur de transport (430), le second moteur de transport (430) étant configuré pour entraîner la seconde chaîne à mailles de transport (410) en rotation à travers le second arbre de transport (420), de sorte que la seconde chaîne à mailles de transport (410) soit capable de transporter les aliments du premier dispositif de transport (300) vers l'orifice d'évacuation (110).

7. Grille-pain selon la revendication 6, dans lequel le second dispositif de chauffage (600) comprend au moins deux tubes chauffants, et les deux tubes chauffants au moins sont respectivement situés sur les côtés supérieur et inférieur d'une surface de transport de la seconde chaîne à mailles de transport.

8. Grille-pain selon la revendication 7, comprenant en outre un isolant thermique (800) placé entre les tubes chauffants et le bac d'alimentation (200).

9. Grille-pain selon l'une quelconque des revendications 1 à 8, dans lequel le bac d'alimentation (200) est en outre pourvu d'un couvercle supérieur (230) recouvrant de manière amovible l'entrée de matériau (220).
